# EUROPÄISCHE PATENTSCHRIFT

(11) **EP 0 852 383 B1**
(45) Veröffentlichungstag und Bekanntmachung des Hinweises auf die Patenterteilung: **02.11.2000**
(21) Anmeldenummer: 97114220.3
(22) Anmeldetag: 18.08.1997
(51) Int. Cl.: G21C 17/01

(54) **Prüfmanipulator zur Wirbelstrom- und Ultraschallprüfung von hohlzylindrischen Kernreaktorbauteilen, insbesondere von Steuerstabantriebsgehäusen**
Manipulator for eddy current and ultrasound monitoring of hollow cylindrical nuclear reactor structures, in particular of control rod drive housings
Manipulateur pour le contrôle par courants de Foucault ou par ultrasons des structures cylindriques creuses d'un réacteur nucléaire, en particulier des carters des entraînements de barre de contrôle

(30) Priorität: 02.01.1997 DE 29700027 U
(43) Veröffentlichungstag der Anmeldung: 08.07.1998
(73) Patentinhaber: SIEMENS AKTIENGESELLSCHAFT, 80333 München (DE)
(72) Erfinder: Huber, Franz Ferdinand, 91054 Erlangen (DE); Orth, Werner, 34613 Schwalmstadt (DE)

(56) Entgegenhaltungen:
- DE-A- 2 417 822
- US-A- 3 809 607
- US-A- 3 862 578
- US-A- 4 645 637

## Beschreibung

Die Erfindung betrifft einen Prüfmanipulator zur Prüfung eines hohlzylindrischen Kernreaktorbauteils, insbesondere eines abgestuft verjüngten Gehäuseteils, wobei der Prüfmanipulator von einer Seite in das Bauteil eingeführt wird und in der Regel mehrere Sonden (z.B. Ultraschall- und Wirbelstromsonden) aufweist. Vor allem betrifft die Erfindung einen Prüfmanipulator zur Innenprüfung von Steuerstabantriebsgehäusen in Kernreaktoren, insbesondere Siedewasserreaktoren.

Steuerstabantriebsgehäuse sind in der Regel hohlzylindrische, abgestuft verjüngte Bauteile, die im unteren, größeren Teil mehrere (meistens zwei) Schweißnähte enthalten und im oberen, engeren Teil mit einer Schweißnaht mit dem Reaktordruckbehälter verbunden sind. Diese Schweißnähte können mit Ultraschall (US) und Wirbelstrom (WS) geprüft werden. Es sind Manipulatoren bekannt geworden, die mittels eines Schubschlauches einen Prüfkopf an die zu untersuchende Schweißnaht verfahren. Das Verfahren mittels Schubschlauches führt zu einer hohen Ungenauigkeit beim Positionieren des Prüfkopfträgers im Rohr, und der Prüfkopf muß für die Prüfung jeder Schweißnaht neu ausgerichtet werden. Da sich das Steuerstabantriebsgehäuse im oberen Teil verjüngt, muß bei der Prüfung der in diesem Teil liegenden Schweißnaht zusätzlich der Prüfkopf ausgetauscht werden. Der Aufbau des Prüfsystems in dieser Weise führt zu ungenauen Meßergebnissen und aufgrund langer Rüst- und Meßzeiten zu hohen Dosisbelastungen des Personals.

Es sind deshalb bereits Prüfmanipulatoren im Einsatz, bei denen der Schubschlauch durch teleskopierbare Schienen ersetzt ist. Werden jedoch die Schienen durch Einschieben der Teleskopverbindungen verkürzt, so bilden die elektrischen Anschlüsse der Sonden Schlaufen, die sich mit den verschiebbaren Teleskoprohren verkeilen können und zu Knickstellen und Beschädigungen führen. Außerdem muß ein Koppelmedium (in der Regel deionisiertes Wasser) in das Gehäuse geführt werden und daher an dem offenen Ende, an dem die Schienen an eine Antriebseinheit zum Drehen und Verschieben der Prüfsysteme angeschlossen sind, abgedichtet werden. Bei den engen räumlichen Verhältnissen und den komplizierten Dichtungen ist ein Auswechseln beschädigter Kabel äußerst schwierig und mit einer Vielzahl von zeitaufwendigen Montageschritten verbunden.

Die Erfindung hat sich die Aufgabe gestellt, einen störunanfälligen und reparaturfreundlichen Prüfmanipulator für die US-Prüfung, insbesondere eine kombinierte WS- und US- Prüfung von Steuerstabantriebsgehäusen oder ähnlichen hohlzylindrischen Kernreaktorbauteilen, bereit zu stellen, welcher in einem Prüfvorgang alle Schweißnähte solcher Bauteile prüft.

Die Aufgabe wird erfindungsgemäß durch einen Prüfmanipulator mit den Merkmalen des Anspruchs 1 gelöst. Vorteilhafte Weiterbildungen sind in den Unteransprüchen angegeben. Dabei kommt ein modular aufgebauter Prüfmanipulator zum Einsatz, welcher mit Prüfköpfen zur WS- und US-Prüfung der Schweißnähte des Steuerstabantriebsgehäuses bestückt ist.

Am unteren Ende des Prüfmanipulators sitzt bei der nachstehend beschriebenen, besonders vorteilhaften Ausführungsform eine Antriebseinheit, die aus zwei Antriebsachsen besteht und die ein zentral gelagertes Hüllrohr verfahren kann. Das Hüllrohr kann durch eine Antriebsachse in Drehung versetzt und durch die andere Antriebsachse axial verfahren werden. Die Antriebseinheit wird mit einer Kupplung, vorzugsweise einer Adapterplatte, die eine Zu- und Ableitung für Ankoppelmedium besitzt, am Steuerstabantriebsgehäuses befestigt und dieses so wasserdicht abgeschlossen. Ein im Hüllrohr gelagertes Zentralrohr, welches aus mehreren zusammenkuppelbaren Einheiten besteht, ragt in das Steuerstabantriebsgehäuse hinein. An definierten Stellen des Zentralrohres sitzen Kontaktträger (z.B. seitliche Vorsprünge) für die elektrischen Anschlüsse der Prüfköpfe. Diese Kontaktträger legen bereits eine Grobjustierung fest für die Position von Prüfsystemträgern zum Prüfen der Schweißverbindungen, wobei die Prüfsystemträger untereinander möglichst den selben Abstand haben, wie die zu prüfenden Schweißnähte.

Dieser Abstand kann an den jeweiligen Gehäusetyp angepaßt werden, indem Zwischenstücke in das Zentralrohr eingekoppelt werden. Die Prüfsystemträger sind zur Feinjustierung zudem um einen gewissen Betrag längs des Zentralrohres verschiebbar ausgeführt. Im Inneren des Zentralrohres befinden sich mindestens sämtliche elektrischen Zuleitungen für die Prüfsystemträger, wie z.B. Spannungsversorgung. Die Verbindung der Zuleitungen beim Koppeln der Rohrstücke erfolgt im Inneren der Rohrenden der einzelnen Zentralrohrmodule mit Hilfe von Steckverbindungen. Die Zentralrohrmodule besitzen eine Kopplung, die das wasserdichte und kraftschlüssige Verbinden der Zentralrohrmodule erlaubt.

Das Zentralrohr bildet so einen wasserdicht abgeschlossenen Kabelschacht, in dem die Zuleitungen entsprechend den zwischengekoppelten Zentralrohrmodulen durch einfache elektrische Steckverbindungen an die erforderliche Länge angepaßt werden können.

Im unteren, größeren Teil des Steuerstabantriebsgehäuses kommen dabei bevorzugt zwei Prüfsystemträger zum Einsatz, sowie ein weiterer kleinerer Prüfsystemträger, der im oberen, sich verjüngenden Teil eingesetzt wird. Die Prüfsystemträger für den größeren Gehäuseteil tragen z.B. je sechs Prüfköpfe am Umfang, vier US-Prüfköpfe und zwei WS-Prüfköpfe. Der kleinere Träger für den oberen Gehäuseteil ist vorteilhaft mit zwei bis drei US-Prüfköpfen am Umfang bestückt. Die Prüfsystemträger können um einen gewissen Betrag axial verschoben und festgesetzt werden. Die Zuleitungen werden aus dem Inneren des Zentralrohres auf die Kontaktträger, vorteilhaft einen seitlichen Vorsprung, geführt und münden in Kontaktstiften. Elektrische, flexible Verbindungen führen von den Kontaktstiften zu den Prüfköpfen. Die Länge dieser elektrischen Verbindungen entspricht dabei dem maximalen Betrag um den der Prüfsystemträger axial am Zentralrohr verfahren werden kann.

Werden die Prüfsystemträger axial verschoben, so können die elektrischen Zuleitungen Schlaufen bilden, die höchsten dem Betrag der maximalen Längsverschiebung entsprechen. Für die Schlaufenbildung steht zudem zwischen dem Zentralrohr und dem zu untersuchenden Bauteil ausreichend Raum zur Verfügung. Die Zuleitungen sind durch das Zentralrohr vor Beschädigungen geschützt. Schäden können höchstens zwischen den Kontaktstiften und den Prüfköpfen auftreten. Diese elektrischen Zuleitungen sind aber von außen leicht zugänglich und können einfach ersetzt werden.

Die Ankopplung des Zentralrohres an die Antriebseinheiten und der Zuleitungen an eine Auswerteeinheit erfolgt außerhalb des mit der Adapterplatte wasserdicht verschlossenen Bauteils. Komplizierte Dichtungen zwischen Zentralrohr und Antriebseinheit können daher entfallen.

Die Prüfköpfe sind relativ zu der zu prüfenden Innenwand des Bauteils verfahrbar und können an diese angefedert sein. Zusätzlich können die Prüfköpfe durch eine Vorrichtung auch schräg (z.B. senkrecht) zur Innenwand des Bauteils verfahren werden um z.B. Beschädigungen der Prüfköpfe beim Einfahren des Prüfmanipulators in das Bauteil zu verhindern. Die Vorrichtung kann von außen z.B. hydraulisch oder pneumatisch betätigt werden. Durch diese vorteilhafte Ausführungsform kann eine aufwendige Vollkardanaufhängung der Prüfsystemträger und der Prüfköpfe mit Hebelmechanismen und pneumatischer Fernbedienung entfallen.

Bei dem oben beschriebenen Prüfmanipulator können sämtliche Schweißnähte durch US- und WS-Prüfung in einem Prüfvorgang untersucht werden. Dies reduziert Rüst- und Prüfzeiten und führt zu einer geringeren Dosisbelastung des Personals. Die Befestigung der Prüfsystemträger an definierten Stellen des starren Zentralrohres erlaubt eine genauere Positionierung gegenüber der Positionierung mittels eines Schubschlauches, vermeidet die Schlaufenbildung des Kabelbaums bei einer teleskopartigen Ausführung und führt weiterhin zu einer mechanisch weniger aufwendigen Konstruktion und damit höheren Zuverlässigkeit und Wirtschaftlichkeit des Prüfmanipulators.

Die Vorrichtung kann prinzipiell auch mit einem einzigen Prüfsystemträger und einem einzigen Prüfkopf ausgeführt werden. Ihre Vorteile treten aber vor allem dann auf, wenn mehrere Schweißnähte geprüft werden sollen, die jeweils ungefähr kreisförmig um die Achse eines Bauteils mit hohlzylindrischem Querschnitt verlaufen. Dann wird bevorzugt eine der Anzahl der Schweißnähte entsprechende Anzahl von Modulen mit jeweils einem Prüfsystemträger verwendet.

Nachfolgend wird die Erfindung anhand von Ausführungsbeispielen näher erläutert.

Dabei zeigen
- FIG 1: einen Schnitt durch ein Steuerstabantriebsgehäuse mit einem Prüfmanipulator;
- FIG 2: einen vergrößerten Ausschnitt aus Fig. 1;
- FIG 3: Prüfkopf mit Versorgungsleitungen und Steckverbindungen nach FIG 1;
- FIG 4: Schnitt entlang der Linie IV-IV in FIG 3.

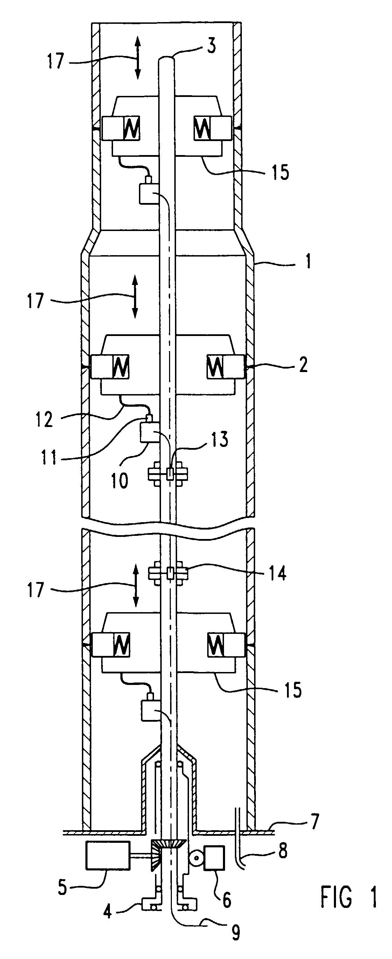

In Fig. 1 sitzen am unteren Ende des Prüfmanipulators zwei Antriebseinheiten 5 und 6, welche ein zentral gelagertes Hüllrohr 4 verfahren können. Das Hüllrohr 4 kann durch eine Antriebseinheit 6 axial verfahren werden. Beide Antriebseinheiten werden außerhalb des zu untersuchenden Bauteils 1 an einer Adapterplatte 7 angeschlossen. Die Adapterplatte 7 besitzt zur Flutung des Bauteil 1 einen Zu- und Ablauf 8, mit dem ein Ankoppelmedium in das Bauteils 1 ein- und ausgelassen werden kann. Ein im Hüllrohr 4 gelagertes Zentralrohr 3, welches aus mehreren zusammenkoppelbaren Zentralrohrmodulen besteht, ragt in das Bauteil 1 hinein und kann mit einer Antriebseinheit 5 in Drehung versetzt werden. An definierten Stellen des Zentralrohres 3 sitzen Prüfsystemträger 15 zum Prüfen der Schweißverbindungen 2, welche untereinander den selben Abstand haben, wie die zu prüfenden Schweißnähte 2. Der Abstand der Prüfsystemträger 15 zueinander kann durch Einkoppeln verschieden langer Zentralrohrmodule eingestellt werden. Die Zentralrohrmodule besitzen dazu an ihren Enden Kopplungen 14, die eine wasserdichte und kraftschlüssige Verbindung der einzelnen Zentralrohrmodule ermöglichen. Die Prüfsystemträger 15 sind für die Feinjustierung entlang der Pfeile 17 axial verschieb- und festsetzbar angeordnet. Die Prüfsystemträger 15 besitzen zur Prüfung der Innenwand des Bauteils 1 Prüfköpfe 16, die relativ zur Innenwand des Bauteils 1 verfahrbar, insbesondere schräg oder senkrecht zur Innenwand beweglich ausgeführt sind und an dieser angefedert sein können.

Im Inneren des Zentralrohres 3 befinden sich die elektrischen Zuleitungen für die Prüfsystemträger 15, wie z.B. die Spannungsversorgung für die Prüfköpfe 16. Die Verbindung der Zuleitungen 9 beim Koppeln der Zentralrohrmodule erfolgt im Inneren des Zentralrohres 3 mit Hilfe von einfachen Steckverbindungen 13, die nicht wasserdicht ausgeführt sein müssen, da das Innere des Zentralrohres einen wasserdicht abgeschlossenen Kabelschacht bildet. Die Zuleitungen 9 zu den Prüfköpfen 15 werden so durch Zusammenstecken an die erforderliche Länge ohne Schlaufenbildung angepaßt. Die Zuleitungen 9 sind in einen seitlichen Vorsprung 10 geführt, der als Kontaktträger dient, und münden in Kontaktstiften 11. Von dort führt eine isolierte, flexible, elektrische Verbindung 12 zu den Prüfköpfen 16.

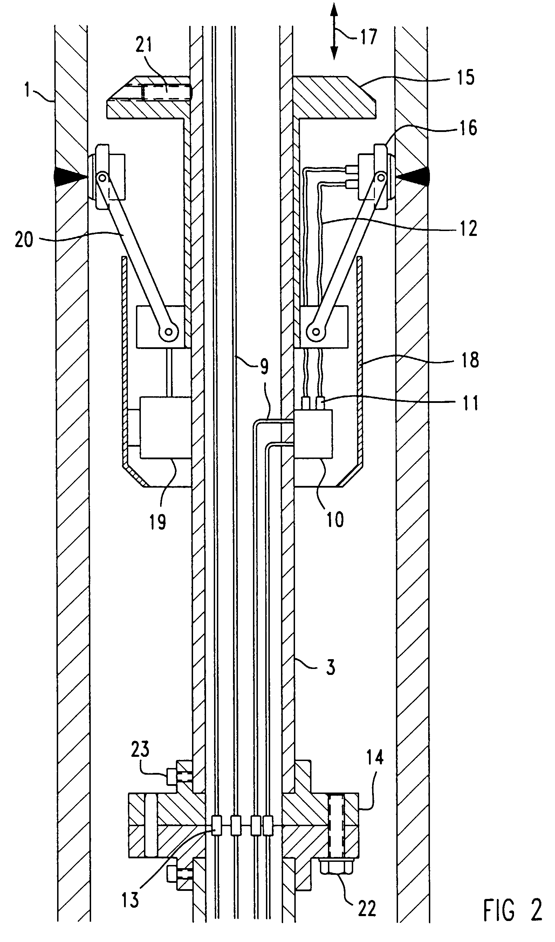

Fig. 2 zeigt einen vergrößerten Ausschnitt des Zentralrohres 3 mit Kopplung 14 und Prüfsystemträger 15 nach Fig. 1. Die Kopplungsstücke 14 werden durch Schraubverbindungen 23 am Ende jeden Zentralrohrmoduls wasserdicht und formschlüssig befestigt. Die Kopplungsstücke 14 können untereinander ebenfalls mit Schraubverbindungen 22 wasserdicht und kraftschlüssig verbunden werden. Die Zuleitungen 9 werden mit Hilfe von einfachen Steckverbindungen 13 an die entsprechende Länge angepaßt. Die Zuleitungen sind auf Höhe der Prüfsystemträger 15 in einen fest am Zentralrohr 3 befestigten seitlichen Vorsprung 10 geführt und münden in Kontaktstiften 11. Von den Kontaktstiften führen isolierte, flexible, elektrische Zuleitungen 12 zu den Prüfköpfen 16. Jeder seitliche Vorsprung 10 besitzt zusätzlich zu den für die Versorgung der am Prüfsystemträger 15 angebrachten Prüfköpfe 16 weitere, unbesetzte Kontaktstifte 11. Diese Kontaktstifte 11 können beim Ausfall einzelner Zuleitungen 9 dazu verwendet werden, den betroffenen Prüfkopf 16 wieder mit einer Auswerteeinheit zu verbinden. Bei der Feinjustierung des Prüfsystemträgers 15 und der anschließenden Fixierung, z.B. mit Hilfe eines Schraubelements 21, können die flexiblen, elektrischen Verbindungen 12 nur relativ kleine Schlaufen bilden, da der Prüfsystemträger 15 bei der Feinjustierung nur um einen geringen Betrag axial am Zentralrohr 3 verschoben wird. Die flexiblen, elektrischen Zuleitungen 12 sind zudem durch einen verfahrbaren zylindrischen Mantel 18 vor mechanischer Beschädigung durch das Bauteil 1 geschützt.

Die Prüfköpfe 16 können vertikal zur Innenwand des Bauteils 1 verfahren werden und sind an dieser angefedert. Sie sind dazu über einen Hebelarm 20 mit dem Prüfsystemträger 15 verbunden. Dem Hebelarm 20 ist eine Feder zugeordnet, um den Prüfkopf 16 an die Innenwand des Bauteils 1 anzufedern. Der Prüfsystemträger 15 ist mit einem Verschiebeelement 19 verbunden, das den mit ihr fest verbundenen zylindrischen, konzentrisch zum Zentralrohr 3 angeordneten, Mantel 18 axial verfahren kann. Das Verschiebeelement 19 kann z.B. pneumatisch oder hydraulisch von außen angetrieben werden. Wird der zylindrische Mantel 18 axial in Richtung des Prüfkopfes 16 verfahren, so wird der Hebelarm 20 nach und nach in eine zum Zentralrohr parallelen Stellung gedreht. Der mit dem Hebelarm verbundene Prüfkopf 16 hebt dadurch von der Innenwand des Bauteils 1 ab und kann an das Zentralrohr 3 angelegt werden. Auf diese Weise können die Prüfköpfe 16 aktiv in vertikaler Richtung zur Innenwand des Bauteils 1 verfahren werden und Beschädigungen des Prüfkopfes 16 beim Einfahren des Prüfmanipulators in das Bauteil 1 können vermieden werden.

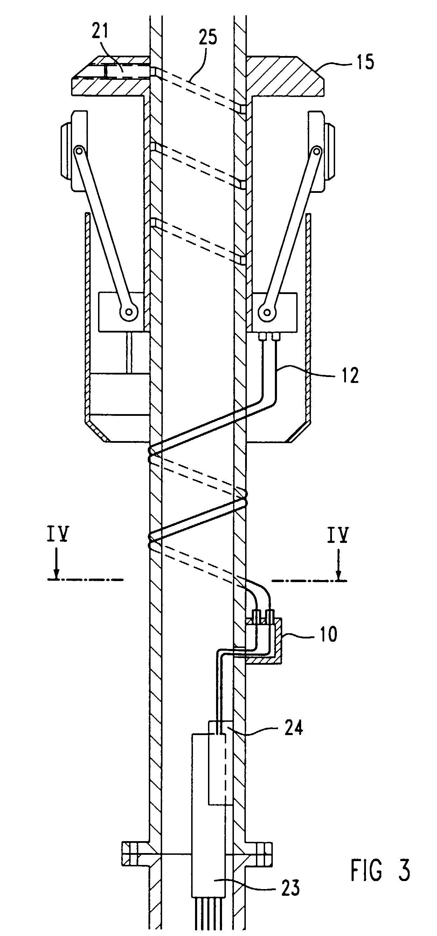

FIG 3 zeigt einen Prüfsystemträger 15 nach FIG 1. Gleichwirkende Teile tragen die selben Bezugsziffern. Um die Schlaufenbildung der elektrischen Zuleitungen 9 und Verbindungen 12 und nicht dargestellter pneumatischer oder hydraulischer Zuleitungen zum Verschiebeelement 19 bei der axialen Feinjustierung des Prüfsystemträgers 15 weiter zu verringern, ist es vorteilhaft, wenn der Prüfsystemträger 15 verschieb- und drehbar ausgeführt ist. Dadurch kann der Prüfsystemträger 15 schraubenförmig zur axialen Feinjustierung am Zentralrohr 3 verschoben werden.

Auf dem äußeren Umfang des Zentralrohres 3 ist dazu eine schraubenförmige Rasternut 25 angebracht, in die das Schraubelement 21 des Prüfsystemträgers eingreifen kann. Der Prüfsystemträger 15 kann somit eine definierte schraubenförmige Bewegung zur axialen Feinjustierung entlang des Zentralrohres 3 vollführen. Die elektrischen Verbindungen 9 sowie die nicht dargestellten, pneumatischen oder hydraulischen Zuleitungen zum Verschiebeelement 19 werden so schraubenförmig am äußeren Umfang des Zentralrohres 3 aufgewickelt. Diese Ausführungsform der Erfindung besitzt den Vorteil, daß der Biegeradius der Leitungen nicht kleiner sein kann als der Außenradius des Zentralrohres 3, was ein Abknicken der Leitungen sicher verhindert. Es ergibt sich der zusätzliche Vorteil, daß die am äußeren Umfang des Zentralrohres 3 aufgewickelten Leitungen wenig Stauraum benötigen.

Im Inneren des Zentralrohres 3 befinden sich die elektrischen Zuleitungen für die Prüfsystemträger 15. Die Verbindung der Zuleitungen 9 beim Koppeln der Zentralrohrmodule erfolgt hier mit Hilfe eines Steckers 23 im Inneren des Zentralrohres 3, der nicht wasserdicht ausgeführt sein muß, da die Zentralrohrmodule einen wasserdichten Kabelschacht bilden.

Der Stecker 23 ist über eine Halterung 24 fest mit dem Zentralrohr 3 verbunden. Dadurch ergibt sich der Vorteil, daß sämtliche im Zentralrohr 3 geführten Zuleitungen 9 in einem Arbeitsgang verbunden werden können, und ein Vertauschen der Zuleitungen ausgeschlossen ist.

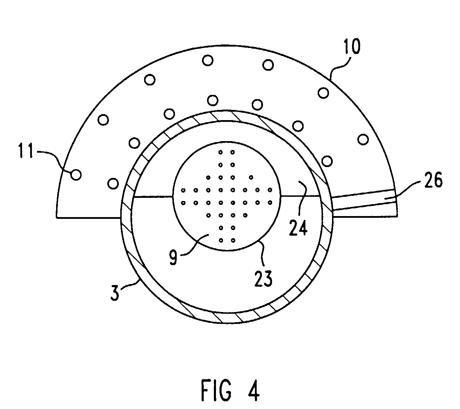

FIG 4 zeigt einen Schnitt entlang der Linie IV-IV in FIG 3. Im Inneren des Zentralrohres 3 befindet sich der Stecker 23 der über eine Halterung 24 fest mit dem Zentralrohr verbunden ist. Im Stecker 23 münden sämtliche Zuleitungen 9 zu den Prüfsystemträgern 15, sowie eventuell vorgesehene Ersatzzuleitungen, die beim Ausfall einer Zuleitung 9 deren Funktion übernehmen können.

Der Stecker 23 kann im Zentralrohr 3 außermittig angebracht sein. Das Zusammenkuppeln der gleichartig aufgebauten Zentralrohrmodule ist dann verpolungssicher. Der Stecker 23 kann auch selbst verpolungssicher ausgeführt sein.

Am äußeren Umfang des Zentralrohres 3 ist ein seitlicher Vorsprung 10 mit einem Fixierbolzen 26 am Zentralrohr 3 befestigt. Die Zuleitungen 9 sind vom Stecker 23 in den seitlichen Vorsprung 10 geführt und münden in Kontaktstifte 11, die beispielsweise auf konzentrischen Kreisen um das Zentralrohr 3 angeordnet sein können.

## Patentansprüche

1. Prüfmanipulator zur Prüfung eines Kernreaktorbauteils mit ungefähr hohlzylindrischem Querschnitt, insbesondere eines rohrförmigen, abgestuft verjüngten Bauteils (1)
**gekennzeichnet durch**
a) ein in das Bauteil (1) von einem Ende aus einführbares, aus mehreren Zentralrohrmodulen mit wasserdichten Kopplungen (14) zusammengesetztes Zentralrohr (3);
b) eine Kupplung für eine Antriebseinheit (5, 6) zur Drehung und Axialverschiebung des Zentralrohrs (3);
c) einen Kontaktträger (10) an wenigstens einem der aneinandergekoppelten Zentralrohrmodule und einen zwischen dem Kontaktträger (10) und einem Ende des Zentralrohrmoduls verschieb- und fixierbaren Prüfsystemträger (15), der mindestens einen Prüfkopf (16) besitzt;
d) flexible, elektrische Verbindungen (12) außerhalb des Zentralrohrs (3), die eine der Verschiebbarkeit des Prüfsystemträgers (15) entsprechende Länge besitzen und Kontaktstifte (11) auf dem Kontaktträger (10) mit jedem Prüfkopf (16) verbinden;
e) Zuleitungen (9), die im Inneren des Zentralrohrs (3) von den Kontaktstiften (11) zu einer Öffnung am Ende des Zentralrohrs (3) führen und jeweils Steckverbindungen (13) besitzen, die auf Höhe der Kopplungen (14) der Zentralrohrmodule angeordnet sind; und
f) eine Zu- und Ableitung (8) um außerhalb des Zentralrohrs (3) ein Koppelmedium in das Bauteil (1) einzuspeisen, wobei die flexiblen, elektrischen Zuleitungen (12) zu den Prüfköpfen (16) und die Kontaktstifte (11) gegenüber dem Koppelmedium elektrisch isoliert sind.

2. Manipulator nach Anspruch 1,
**gekennzeichnet durch** einen aufgeschrumpften Isolierschlauch zur Isolierung der Kontaktstifte (11) mit den flexiblen elektrischen Verbindungen (12) gegenüber dem Koppelmedium.

3. Manipulator nach Anspruch 1 oder 2,
**dadurch gekennzeichnet,** daß die Zuleitungen (9) für jeden Prüfsystemträger (16) mindestens ein Ersatzkabel enthalten, das zu einem unbesetzten Kontaktstift (11) auf dem Kontaktträger (10) führt.

4. Manipulator nach einem der Ansprüche 1 bis 3,
**dadurch gekennzeichnet,** daß mindestens zwei Prüfsystemträger vorgesehen sind, die mehrere über ihrem Umfang verteilte Ultraschallsonden und Wirbelstromsonden tragen.

5. Manipulator nach einem der Ansprüche 1 bis 4,
**dadurch gekennzeichnet,** daß an einer Spitze des Zentralrohrs (3) ein Prüfsystemträger (15) mit einem kleineren Durchmesser als die anderen Prüfsystemträger (15) angeordnet ist.

6. Manipulator nach einem der Ansprüche 1 bis 5,
**dadurch gekennzeichnet,** daß der Prüfsystemträger (15) am Zentralrohr (3) auch drehbar angeordnet ist.

7. Manipulator nach einem der Ansprüche 1 bis 6,
**dadurch gekennzeichnet,** daß der Prüfsystemträger (15) in einer auf dem Zentralrohr (3) schraubenförmig angebrachten Rasternut (25) geführt ist.

8. Manipulator nach einem der Ansprüche 1 bis 7,
**dadurch gekennzeichnet,** daß die Steckverbindungen in den Zentralrohrmodulen jeweils in einem Stecker (23) zusammengefaßt sind, der auf der Höhe der Kopplungen (14) mit Hilfe einer Halterung (24) fest mit einem Zentralrohrmodul verbunden ist.

9. Manipulator nach einem der Ansprüche 1 bis 8,
**dadurch gekennzeichnet,** daß der Prüfkopf (16) durch eine außerhalb des Zentralrohres (3) angeordnete Hydraulik oder Pneumatik bewegbar ist.

10. Manipulator nach einem der Ansprüche 1 bis 9,
**dadurch gekennzeichnet,** daß das Ende des Zentralrohrs (3) eine Adapterplatte trägt, in der das Zentralrohr (3) drehbar und axial verschiebbar geführt ist und die an ein Ende des Bauteils (1) anschließbar ist.

11. Manipulator nach einem der Ansprüche 1 bis 10,
**dadurch gekennzeichnet,** daß der Prüfkopf (16) schräg zum Zentralrohr (3) verfahrbar ist.

12. Manipulator nach einem der Ansprüche 1 bis 11,
**gekennzeichnet durch** einen den Kontaktträger bildenden seitlichen Vorsprung (10) am Zentralrohrmodul.

## Claims

1. Test manipulator for inspecting a nuclear reactor component with approximately hollow-cylindrical cross-section, in particular a tubular component (1) which tapers in a stepped manner,
characterised by
a) a central tube (3) which can be inserted into the component (1) from one end and is comprised of a plurality of central tube modules with water-tight couplings (14);
b) a coupling for a drive unit (5, 6) for rotation and axial displacement of the central tube (3);
c) a contact carrier (10) on at least one of the central tube modules which are coupled to each other, and a test-system carrier (15) which can be displaced and fixed between the contact carrier (10) and one end of the central tube module and has at least one probe (16);
d) flexible, electrical connections (12) outside the central tube (3) which have a length corresponding to the displaceability of the test-system carrier (15) and connect contact pins (11) on the contact carrier (10) to each probe (16);
e) supply lines (9), which lead inside the central tube (3) from the contact pins (11) to an opening at the end of the central tube (3) and each have plug-in connections (13) which are arranged at the level of the couplings (14) of the central tube modules; and
f) a supply and discharge line (8) in order to feed a coupling medium into the component (1) outside the central tube (3), the flexible, electrical supply lines (12) to the probes (16) and the contact pins (11) being electrically insulated with respect to the coupling medium.

2. Manipulator according to claim 1, characterised by a shrunk-on insulating tubing for insulating the contact pins (11) with the flexible electrical connections (12) with respect to the coupling medium.

3. Manipulator according to claim 1 or 2, characterised in that the supply lines (9) for each test-system carrier (16 [sic]) contain at least one spare cable which leads to an unoccupied contact pin (11) on the contact carrier (10).

4. Manipulator according to one of claims 1 to 3, characterised in that there are provided at least two test-system carriers, which carry a plurality of ultrasonic probes and eddy-current probes distributed over their circumference.

5. Manipulator according to one of claims 1 to 4, characterised in that arranged at one tip of the central tube (3) is a test-system carrier (15) which has a smaller diameter than the other test-system carriers (15).

6. Manipulator according to one of claims 1 to 5, characterised in that the test-system carrier (15) is also arranged rotatably on the central tube (3).

7. Manipulator according to one of claims 1 to 6, characterised in that the test-system carrier (15) is guided in a scanning groove (25) installed in a helical manner on the central tube (3).

8. Manipulator according to one of claims 1 to 7, characterised in that the plug-in connections in the central tube modules are in each case comprised in a plug connector (23) which, at the level of the couplings (14), is securely connected to a central tube module with the aid of a holding device (24).

9. Manipulator according to one of claims 1 to 8, characterised in that the probe (16) is movable by means of hydraulic or pneumatic equipment arranged outside the central tube (3).

10. Manipulator according to one of claims 1 to 9, characterised in that the end of the central tube (3) carries an adapter plate in which the central tube (3) is guided rotatably and axially displaceably and which can be connected to one end of the component (1).

11. Manipulator according to one of claims 1 to 10, characterised in that the probe (16) can move at an inclined angle with respect to the central tube (3).

12. Manipulator according to one of claims 1 to 11, characterised by a lateral projection (10) on the central tube module, which lateral projection forms the contact carrier.

## Revendications

1. Manipulateur de contrôle d'une pièce de réacteur nucléaire de section transversale à peu près cylindrique creuse, notamment d'une pièce (1) tubulaire qui se rétrécit de manière étagée
caractérisé par
a) un tube (3) central pouvant être introduit dans la pièce (1) depuis une extrémité et composé de plusieurs modules de tube central à accouplements (14) étanches à l'eau ;
b) un accouplement pour une unité (5, 6) d'entraînement servant à faire tourner et à déplacer axialement le tube (3) central ;
c) un support (10) de contact sur au moins l'un des modules de tube central accouplés les uns aux autres et un support (15) de système de contrôle qui peut être déplacé et immobilisé entre le support (10) de contact et une extrémité du module de tube central et qui a au moins une tête (16) de contrôle ;
d) des liaisons (12) électriques souples à l'extérieur du tube (3) central qui ont une longueur correspondant à la faculté de déplacement du support (15) de système de contrôle et qui relient des broches (11) de contact sur le support (10) de contact à chaque tête (16) de contrôle ;
e) des lignes (9) d'alimentation qui vont à l'intérieur du tube (3) central des broches (11) de contact à une ouverture à l'extrémité du tube (3) central et qui ont chacune des liaisons (13) à enfichage qui sont montées au niveau des accouplements (14) des modules de tube central ; et
f) une ligne (8) d'alimentation et d'évacuation pour envoyer extérieurement au tube (3) central un agent de couplage dans la pièce (1), les lignes (12) d'alimentation électrique souples allant aux têtes (16) de contrôle et les broches (11) de contact étant isolées du point de vue électrique par rapport à l'agent de couplage.

2. Manipulateur suivant la revendication 1,
caractérisé par un tuyau souple isolant fretté servant à isoler par rapport à l'agent de couplage les broches (11) de contact ayant les liaisons (12) électriques souples.

3. Manipulateur suivant la revendication 1 ou 2,
caractérisé en ce que les lignes (9) d'alimentation contiennent pour chaque support (16) de système de contrôle au moins un câble de remplacement qui va à une broche (11) de contact inoccupée sur le support (10) de contact.

4. Manipulateur suivant l'une des revendications 1 à 3,
caractérisé en ce qu'il est prévu au moins deux supports de système de contrôle qui portent plusieurs sondes à ultrasons et sondes à courant de Foucault réparties sur leur pourtour.

5. Manipulateur suivant l'une des revendications 1 à 4,
caractérisé en ce qu'il est monté sur un sommet du tube (3) central un support (15) de système de contrôle ayant un diamètre plus petit que les autres supports (15) de système de contrôle.

6. Manipulateur suivant l'une des revendications 1 à 5,
caractérisé en ce que le support (15) de système de contrôle est monté aussi tournant sur le tube (3) central.

7. Manipulateur suivant l'une des revendications 1 à 6,
caractérisé en ce que le support (15) de système de contrôle est guidé dans une rainure (25) d'encliquetage ménagée de manière hélicoïdale sur le tube (3) central.

8. Manipulateur suivant l'une des revendications 1 à 7,
caractérisé en ce que les liaisons à enfichage sont réunies dans les modules de tube central chaque fois en un connecteur (23) qui est relié au moyen d'une fixation (24) de manière fixe à un module de tube central au niveau des accouplements (14).

9. Manipulateur suivant l'une des revendications 1 à 8,
caractérisé en ce que la tête (16) de contrôle peut être déplacée par un système hydraulique ou pneumatique monté à l'extérieur du tube (3) central.

10. Manipulateur suivant l'une des revendications 1 à 9,
caractérisé en ce que l'extrémité du tube (3) central porte une plaque d'adaptateur dans laquelle le tube (3) central est guidé de manière à pouvoir tourner et coulisser axialement et qui peut être raccordée à une extrémité de la pièce (1).

11. Manipulateur suivant l'une des revendications 1 à 10,
caractérisé en ce que la tête (16) de contrôle peut être déplacée en biais par rapport au tube (3) central.

12. Manipulateur suivant l'une des revendications 1 à 11,
caractérisé par une partie (10) latérale en saillie sur le module de tube central formant le support de contact.
